# EUROPEAN PATENT APPLICATION

(11) **EP 3 041 193 A1**
(43) Date of publication of application: **06.07.2016**
(21) Application number: 15305001.8
(22) Date of filing: 05.01.2015
(51) Int. Cl.: H04L 29/06, H04L 29/08

(54) **Method and device for transmission of media content**

(71) Applicant: ALCATEL LUCENT, 92100 Boulogne-Billancourt (FR)
(72) Inventor: Choi, Nakjung, Murray Hill, NJ 07974-0636 (US)
(74) Representative: ALU Antw Patent Attorneys

(57) **Abstract**

Embodiments relate to a method for transmission of a media content from a source device (3, 4) to a destination device (2, 3), executed by the source device (3, 4), wherein the media content is available in a plurality of versions, the method comprising:
- receiving (T1, U1), from the destination device (2, 3), a request (RQ) for a segment (S) of the media content, the request specifying at least two versions,
- obtaining the requested segment (S) in one of the at least two versions, and
- sending (T7, U4), to the destination device (2, 3), the obtained segment (S).

## Description

### FIELD OF THE INVENTION

The present invention relates to the field of telecommunications. In particular, the present invention relates to methods and devices for transmission of media content.

### BACKGROUND

In Dynamic Adaptive Streaming over HTTP (DASH) and similar adaptive streaming techniques, a media content is available in a plurality of version of respective qualities or bit rates to accommodate dynamic users' circumstance. Typically, for successive segments (or chunks) of the media content, a Rate Determination Algorithm (RDA) at the client estimates the available download bandwidth and selects a quality accordingly. The client then requests the segment in the selected quality from the origin server.

A large part of the content available on the Internet is distributed through a Content Delivery Network (CDN). When a client requests a content asset available at an origin server, the request is directed to a CDN server wherein content is cached. If the requested content asset is available at the CDN server, the CDN server may respond directly without the need to contact the origin server or another CDN server.

Since a DASH segment in a given quality is regarded as an individual asset, a CDN server may need to request a segment in a given quality from the origin server or from another CDN server, even if the same segment is available locally in another quality. This limits the efficiency of the CDN for delivering adaptive streaming content.

### SUMMARY

It is thus an object of embodiments of the present invention to propose methods and devices for transmission of media content, which do not show the inherent shortcomings of the prior art.

Accordingly, embodiments relate to a method for transmission of a media content from a caching device to a client device, executed by the client device, wherein the media content is available in a plurality of versions, the method comprising:
- selecting at least two versions for a segment of the media content,
- sending, to the caching device, a request specifying the segment and the at least two versions,
- receiving, from the caching device, the segment in one of the at least two versions.

Correspondingly, embodiments relate to a client device for transmission of a media content from a caching device to the client device, wherein the media content is available in a plurality of versions, the client device comprising:
- means for selecting at least two versions for a segment of the media content,
- means for sending, to the caching device, a request specifying the segment and the at least two versions,
- means for receiving, from the caching device, the segment in one of the at least two versions.

The media content may comprise a video and the plurality of versions may comprise the video encoded in respective qualities.

The request may comprise a regular expression specifying the at least two versions.

Selecting at least two versions may comprise:
- determining one version in function of parameters representative at least of a network condition, and
- determining a predetermined range of versions in function of said one version.

Other embodiments relate to a method for transmission of a media content from a source device to a destination device, executed by the source device, wherein the media content is available in a plurality of versions, the method comprising:
- receiving, from the destination device, a request for a segment of the media content, the request specifying at least two versions,
- obtaining the requested segment in one of the at least two versions, and
- sending, to the destination device, the obtained segment.

Correspondingly, embodiments relate to a source device for transmission of a media content from the source device to a destination device, wherein the media content is available in a plurality of versions, the source device comprising:
- means for receiving, from the destination device, a request for a segment of the media content, the request specifying at least two versions,
- means for obtaining the requested segment in one of the at least two versions, and
- means for sending, to the destination device, the obtained segment.

In some embodiments, the source device is a caching device comprising a local cache, and obtaining the requested segment in one of the at least two versions comprises:
- determining whether the segment in any of the at least two version is stored in the local cache,
- if the segment in any of the at least two versions is stored in the local cache, obtaining the requested segment in one of the at least two versions from the local cache,
- if the segment in none of the at least two versions is stored in the local cache, sending a request for the segment to another source device and receiving, from the other source device, a response including the segment in one of the specified versions.

In some embodiments, the source device is an origin device comprising a storage wherein the segment is stored in all the available versions.

The method may comprises selecting one of the at least two versions in function of a selection policy, and obtaining the requested segment in the selected version.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for transmission of a media content,
Figures 2, 3 and 4 are flowcharts of methods for transmission of a media content in the system of Figure 1, and
Figure 5 is a structural view of a communication device of the system of Figure 1.

### DESCRIPTION OF EMBODIMENTS

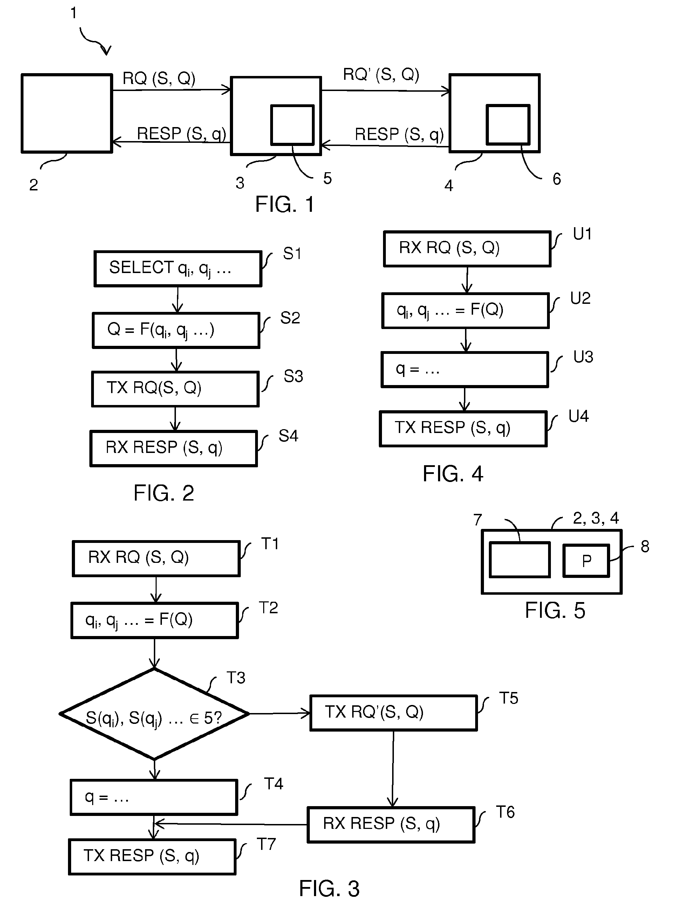

**Figure 1** shows a system 1 for transmission of media contents. The system 1 comprises one or more client devices 2, one or more caching devices 3 and one or more origin devices 4, only one of each being shown for simplicity. The client devices 2, caching devices 3 and origin devices 4 are connected by a network (not shown).

An origin device 4 comprises a local storage 6 wherein media content is stored. The media content is available at the origin device 4 in a plurality of versions. For example, the media content comprises a video and the versions may correspond to the video encoded in various qualities (or in other words a plurality of bit rates). In response to a request for a segment of the media content, the origin device 4 sends the requested segment.

A client device 2 uses an adaptive streaming technique to obtain media content. Accordingly, the client device 2 sends successive requests for respective segments. Successive requests may correspond to different versions of the media content.

A caching device 3 caches segments of the media content in a local cache 5. In response to a request for a segment of the media content, the caching device 3 obtains the requested segment either from the local cache 5, from another caching device 3 or from the origin device 4, and sends the obtained segment.

The functioning of the system 1 is described in more detail hereafter with reference to Figures 2 to 4.

**Figure 2** is a flowchart of a method for transmission of media content, executed by a client device 2.

Initially, the client device 2 obtains data representative of the media content, the available segments and versions, for example a manifest file or a Media Presentation Description. Then, the client device 2 obtains the media content by sending successive request for segments of the media content. Figure 2 shows the steps associated with requesting and receiving one segment.

First, the client device 2 selects at least two versions for a segment S of the media content (Step S1). The at least two versions correspond for example to the segment encoded according to various qualities qᵢ, qᵢ... For example, the client device 2 use a Rate Determination Algorithm (RDA) which determines one version (one quality q_{rda}) in function of network conditions, buffer filling... and selects versions based on a corresponding static range such as [q_{rda}, q_{rda+1}, q_{rda+2}]. In another example, the RDA dynamically determines a plurality of versions based on parameters such as network conditions, buffer filling...

Then, the client device 2 generates a regular expression Q which specifies the selected versions (Step S2). For example:
- If versions associated with a range of qualities q2, q3 and q4 are selected at step S1, the regular expression Q may be q{2,3,4} or q{2-4}.
- If versions associated with a list of qualities q2, q3, q4, q6 are selected at step S1, the regular expression Q may be q{2, 3, 4, 6} or q{2-4, 6}. In some embodiments, the regular expression may specify priorities for the versions: q{2, 4, 6, 3}.
- If versions associated with all of the available qualities are selected at step S1, the regular expression may be q*.

Then, the client device 2 sends a request RQ specifying the segment S and the at least two versions (step S3). The segment S may be specified by a segment number (s1, s2...) and/or a bit range. The at least two versions are specified by the regular expression Q. The request RQ is directed to a caching device 3 and processed as described hereafter with reference to Figure 3. The format of the request RQ may be similar to a DASH request, except for the specification of the desired versions.

In response to the request RQ, the client device 2 receives, from the caching device 3, a response RESP including the segment S in one of the at least two versions (Step S4). The quality of the received version is denoted q. The segment S in quality q may be buffered, decoded, played out...

By sending successive requests RQ, the client device 2 obtains respective segments S of the media content. The versions specified in successive requests RQ may change, thereby allowing the client device 2 to adapt to the network conditions, buffer filling, processing load...

In an embodiment, at least one of the successive requests sent by the client device 2 may specify one single version of the requested segment. Thus, the client device 2 has full control on the received version.

**Figure 3** is a flowchart of a method for transmission of media content, executed by a caching device 3.

As explained before, a request RQ from a client device 2 is directed to a caching device 3. The request RQ specifies a segment S and at least two versions. The versions are specified by the regular expression Q. A caching device 3 may also sends a request RQ for a segment S and specifying one or more versions to another caching device 3. Accordingly, the caching device 3 receives a request RQ for a segment S, specifying at least two versions (Step T1).

Then, the caching device 3 identifies the versions specified by the request RQ (Step T2). For example, the caching device 3 identifies the qualities qᵢ, qᵢ... matching the regular expression Q.

The requested segment S in the respective versions associated with the qualities qᵢ, qᵢ... correspond to individual assets S(qᵢ), S(qᵢ)... that may or may not be cached in the local cache 5. Thus, the caching device 3 determines whether any of the assets S(qᵢ), S(qᵢ) is stored in the local cache 5 (Step T3).

If at least one of the assets S(qᵢ), S(qᵢ) is stored in the local cache 5, in other words if there is at least one match between the versions of the segment S specified in the request RQ and the content of the local cache 5, the caching device 3 selects one of the matching versions (Step T4). The quality of the selected version is denoted q. In case there is only one match, the single matching version is selected. In case there is more than one match, the caching device 3 may apply a selection policy such as selecting the available version with the highest or lowest quality. In an embodiment, the caching device 3 selects the version based on priorities specified in the regular expression Q.

If none of the assets S(qᵢ), S(qᵢ) is stored in the local cache 5, in other words if there no match between the versions of the segment S specified in the request RQ and the content of the local cache 5, the caching device 3 sends a request RQ' for the segment S (Step T5). The request RQ' may specify the same versions as the request RQ received at step T1, or a subset thereof. The request RQ' may be directed to another caching device 3 wherein it is processed similarly or to the origin device 4 wherein it is processed as described hereafter with reference to Figure 4. In response to the request RQ', the caching device 3 receives a response RESP including the segment S in one of the specified versions (Step T6). The quality of the received version is denoted q.

Accordingly, the caching device 3 obtains the requested segment S in one of the versions specified in the request RQ (quality q). Thus, the caching device 3 sends a response RESP to the request RQ, which includes the obtained segment S in the version of quality q (Step T7).

**Figure 4** is a flowchart of a method for transmission of media content, executed by an origin device 4.

As explained before, a request RQ from a caching device 3 may be directed to the origin device 4. The request RQ specifies a segment S and at least two versions. The versions are specified by the regular expression Q. Accordingly, the origin device 4 receives a request RQ for a segment S, specifying at least two versions (Step U1).

Then, the origin device 4 identifies the versions specified by the request RQ (Step U2). For example, the caching device 3 identifies the qualities qᵢ, qᵢ... matching the regular expression Q.

The requested segment S in the respective versions associated with the qualities qᵢ, qᵢ... correspond to individual assets S(qᵢ), S(qᵢ)... Contrary to a caching device 3, it is assumed that the origin device 4 stores in the storage 6 all the segments S in all the possible versions. Accordingly, in a normal situation, there is a match between the versions of the request RQ and the content of the storage 6.

Then, the origin device 4 selects one of the matching versions (Step U3). The quality of the selected version is denoted q. For example, the origin device 4 may apply a selection policy such as selecting the version with the highest or lowest quality. In an embodiment, the source device 4 selects the version based on priorities specified in the regular expression Q.

Finally, the source device 4 sends a response RESP to the request RQ, which includes the obtained segment S in the version of quality q (Step U4).

In the system 1, a client device 2 uses an adaptive streaming technique to obtain a media content. Accordingly, the client device 2 receives successive segments of the media content in respective versions which may be adapted to current situation such as network condition, buffer filling, processing load... Moreover, one or more caching devices 3 cache content assets. This reduces the load on the origin device 4 and the bandwidth consumption when multiple client devices 2 request the same assets. Moreover, since a client device 2 may request a segment S in a plurality of versions, the probability of a cache hit is improved. Indeed, a cache hit occurs if the local cache 5 of the caching device 3 stores any of the specified versions. Accordingly, caching efficiency of adaptive streaming assets is improved.

In some embodiment, a request from a client device 2 may be directed directly to an origin device 2. Accordingly, in the system 1, a transmission of media content from a source device to a destination device may be:
- A transmission from a caching device 3 to a client device 2,
- A transmission between two caching devices 3,
- A transmission from an origin device 4 to a caching device 3, or
- A transmission from an origin device 4 to a client device 2.

In an embodiment, the system 1 may comprise a client device which sends a request RQ for a segment in only one version, for example a request in the DASH format. Backward compatibility may be offered by processing this request as described with reference to Figures 3 or 4 and analyzing the specified version as a regular expression which specifies only one version.

**Figure 5** is a structural view of a communication device, which may be the client device 2, the caching device 3 or the origin device 4. The communication device comprises a processor 7 and a memory 8. The memory 8 stores a computer program P which, when executed by the processor 7, cause the communication device to execute one of the methods described above with reference to Figures 2 to 4.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of a media content from a caching device (3) to a client device (2), executed by the client device (2), wherein the media content is available in a plurality of versions, the method comprising:
- selecting (S1) at least two versions for a segment (S) of the media content,
- sending (S3), to the caching device (3), a request (RQ) specifying the segment (S) and the at least two versions,
- receiving (S4), from the caching device (3), the segment (S) in one of the at least two versions.

2. Method according to claim 1, wherein the media content comprises a video and the plurality of versions comprises the video encoded in respective qualities.

3. Method according to one of claims 1 and 2, wherein the request (RQ) comprises a regular expression (Q) specifying the at least two versions.

4. Method according to one of claims 1 to 3, wherein selecting (S1) at least two versions comprises:
- determining one version in function of parameters representative at least of a network condition, and
- determining a predetermined range of versions in function of said one version.

5. Computer program (P) comprising instructions for performing the method of one of claims 1 to 4 when said instructions are executed by a computer.

6. Client device (2) for transmission of a media content from a caching device (3) to the client device (2), wherein the media content is available in a plurality of versions, the client device (2) comprising:
- means (7, 8) for selecting at least two versions for a segment (S) of the media content,
- means (7, 8) for sending, to the caching device (3), a request (RQ) specifying the segment (S) and the at least two versions,
- means (7, 8) for receiving, from the caching device (3), the segment (S) in one of the at least two versions.

7. Method for transmission of a media content from a source device (3, 4) to a destination device (2, 3), executed by the source device (3, 4), wherein the media content is available in a plurality of versions, the method comprising:
- receiving (T1, U1), from the destination device (2, 3), a request (RQ) for a segment (S) of the media content, the request specifying at least two versions,
- obtaining the requested segment (S) in one of the at least two versions, and
- sending (T7, U4), to the destination device (2, 3), the obtained segment (S).

8. Method according to claim 7, wherein the media content comprises a video and the plurality of versions comprises the video encoded in respective qualities.

9. Method according to one of claims 7 and 8, wherein the request (RQ) comprises a regular expression (Q) specifying the at least two versions.

10. Method according to one of claims 7 to 9, wherein the source device is a caching device (3) comprising a local cache (5), and wherein obtaining the requested segment (S) in one of the at least two versions comprises:
- determining (T3) whether the segment in any of the at least two versions is stored in the local cache (5),
- if the segment in any of the at least two versions is stored in the local cache (5), obtaining the requested segment (S) in one of the at least two versions from the local cache (5),
- if the segment in none of the at least two versions is stored in the local cache (5), sending (T5) a request (RQ') for the segment (S) to another source device (3, 4) and receiving (T6), from the other source device (3, 4), a response (RESP) including the segment (S) in one of the specified versions.

11. Method according to one of claims 7 to 9, wherein the source device is an origin device (4) comprising a storage (6) wherein the segment is stored in all the available versions.

12. Method according to one of claims 7 to 11, comprising selecting (T5, U3) one of the at least two versions in function of a selection policy, and obtaining the requested segment (S) in the selected version.

13. Computer program (P) comprising instructions for performing the method of one of claims 7 to 12 when said instructions are executed by a computer.

14. Source device (3, 4) for transmission of a media content from the source device (3, 4) to a destination device (2, 3), wherein the media content is available in a plurality of versions, the source device (3, 4) comprising:
- means (7, 8) for receiving, from the destination device (2, 3), a request (RQ) for a segment (S) of the media content, the request specifying at least two versions,
- means (7, 8) for obtaining the requested segment (S) in one of the at least two versions, and
- means (7, 8) for sending, to the destination device (2, 3), the obtained segment (S).

15. System (1) for transmission of media content, comprising at least one client device (2) according to claim 6 and at least one source device (3, 4) according to claim 14.
